# EUROPEAN PATENT APPLICATION

(11) **EP 2 282 229 A1**
(43) Date of publication of application: **09.02.2011**
(21) Application number: 09167513.2
(22) Date of filing: 07.08.2009
(51) Int. Cl.: G02B 6/44, H04B 10/20

(54) **Connectorized optical assembly and method for connecting optical transceiver units by an optical assembly**

(71) Applicant: CCS Technology, Inc., Wilmington, DE 19803 (US)
(72) Inventor: Schreiber, Sebastian, 13053 Berlin (DE); Oelze, Oliver, 14195 Berlin (DE); Kraettli, Christian, 3047 Bremgarten (CH); Brücher, Luis, 13465 Berlin (DE)
(74) Representative: Epping - Hermann - Fischer

(57) **Abstract**

An optical assembly comprises a first optical transmission cable (10) comprising first connectors (11, 12) being of a first type, and a second optical transmission cable (20) comprising second connectors (21, 22) being of a second type. The first optical transmission cable (10) comprises ends (101, 102) respectively being terminated with one of said first connectors (11, 12). The second optical transmission cable (20) comprises ends (201, 202) respectively being terminated with one of said second connectors (21, 22). Connectors (11, 21) of different types are configured to be connected with each other. The second connectors (21, 22) are respectively configured to be connected to an optical transceiver unit (100).

## Description

### Technical field

An optical assembly is described which may be used to connect optical transceivers by parallel optical paths. The disclosure also relates to a method for connecting optical transceiver units by parallel optical paths.

### Background

In an MPO (Multi-Fiber Push-On)-based dual fiber system, optical transceivers may be connected via an optical transmission cable comprising a plurality of optical fibers. The optical transmission cable is respectively terminated on both ends by a connector. The connector may be designed as a multi-fiber connector such as an MPO (Multi-Fiber Push-On) connector or an MTP (Mechanical Transfer Push-On) connector. The optical transceivers can be connected to the optical transmission cable by modules. Each of the modules has a first side with an MPO connector to connect a first side of each module with a connector terminating the optical transmission cable. Another side of each of the modules contains single connectors which are connected to the optical transceiver unit by single patch cord cables.

In prospective optical transmission systems, it is intended that the optical transceivers are provided with multi-fiber parallel connectors so that they can directly be connected to a parallel optical transmission cable without using modules between the parallel optical transmission cable and an optical transceiver. The optical transmission path disposed between transceiver units to be connected comprises a first optical transmission cable which is installed, for example, in the wall or under the floor of a building. Such an optical transmission cable, usually called backbone trunk cable, is connected by a second flexible optical transmission cable called patch cord cable on both of its ends to the transceiver units.

A backbone trunk cable is usually terminated on both of its ends with non-pinned connectors. In order to couple transceiver units via the backbone trunk cable, a patch cord cable is respectively connected between one of the non-pinned connectors of the backbone trunk cable and an input port of each of the optical transceivers. A patch cord cable provided to be connected between a backbone trunk cable and an optical transceiver has to be equipped with the pinned connector and the non-pinned connector. The pinned connector has to be provided at the side of the patch cord cable where the patch cord cable has to be connected with the backbone trunk cable. The non-pinned connector is provided on the side of the patch cord cable where the patch cord cable is to be connected to the port of the optical transceiver. If several backbone trunk cables have to be connected, in line, by a respective patch cord cable, the patch cord cable has to be equipped at both of its sides by pinned connectors.

In the near future it is intended to change from a dual fiber cable technology to a parallel fiber cable technology due to the demand for more bandwidth. The parallel fiber cable technology provides a higher bandwidth system since light signals are transferred parallel by a plurality of e.g. twelve optical fibers arranged between connectors of the parallel fiber cable. When migrating from an MPO-based dual fiber system to an optical fiber technology based on a parallel transmission of optical signals, the user is faced with different requirements for patch cord cables. In structured cabling systems, patch cord cables with pinned and non-pinned connectors are needed to couple a backbone trunk cable to an optical transceiver and patch cord cables having pinned connectors on both sides have to be used to connect two backbone trunk cables.

An optical assembly is described in which optical transmission cables are used to interconnect backbone trunk cables and to connect a backbone trunk cable to an optical transceiver in an easy way. Furthermore, a method for connecting optical transceiver units by an optical assembly is disclosed.

### Summary

An optical assembly comprises a first optical transmission cable comprising first connectors being of a first type, and a second optical transmission cable comprising second connectors being of a second type. The first optical transmission cable comprises ends respectively being terminated with one of said first connectors. The second optical transmission cable comprises ends respectively being terminated with one of said second connectors, wherein connectors of different types are configured to be connected with each other. The second connectors are respectively configured to be connected to an optical transceiver unit.

A method for connecting optical transceiver units by an optical assembly comprises the steps of providing a first optical transmission cable and a second optical transmission cable. Furthermore, first connectors being of a first type and second connectors being of a second type are provided wherein connectors of different types are configured to be connected with each other and said second connectors are configured to be connected to an optical transceiver unit. Ends of said first optical transmission cable are terminated by said first connectors. Ends of said second optical transmission cable are terminated by said second connectors.

### Brief Description of the Drawings

The optical assembly and the method for connecting optical transceiver units by the optical assembly are illustrated by the following figures, in which
- FIG. 1: shows an MPO-based dual fiber system to connect op- tical transceivers,
- FIG. 2: shows an embodiment of an optical assembly having a parallel data path disposed between optical trans- ceivers,
- FIG. 3: shows an embodiment of an optical assembly used for parallel transmission of optical signals between transceiver units,
- FIG. 4: shows an optical assembly used to connect backbone trunks in an optical assembly based on a parallel transmission of optical signals.

### Detailed Description

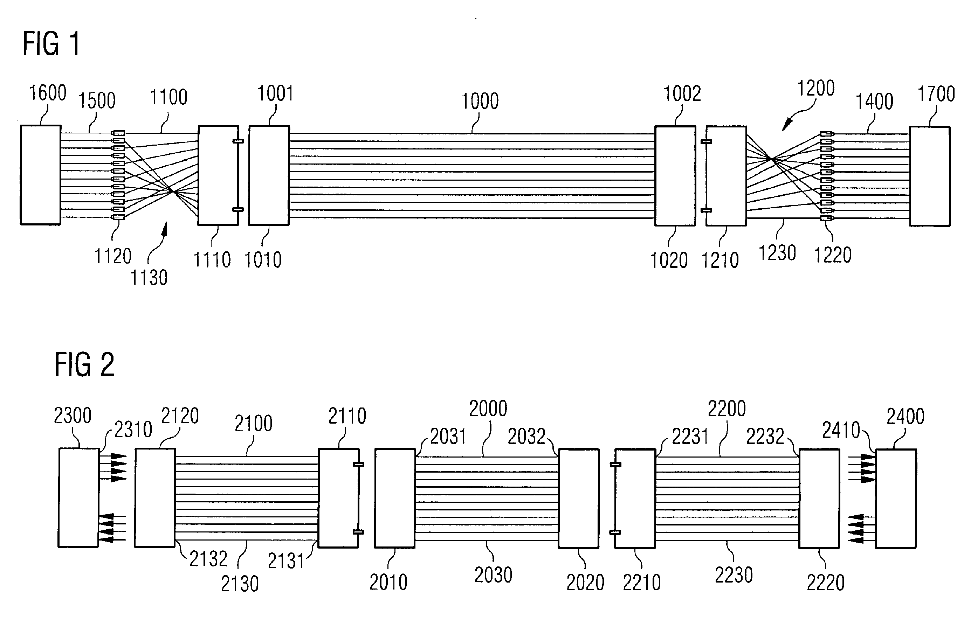

FIG. 1 shows an MPO-based dual fiber system comprising an optical transmission cable 1000 formed as a backbone trunk cable. The backbone trunk cable 1000 comprises a plurality of optical fibers which are terminated at one of their respective ends 1001 by a connector 1010 and at the other of their respective ends 1002 by a connector 1020. The connectors 1010 and 1020 are respectively formed as MPO connectors of a non-pinned type.

An optical transceiver 1600 is connected to the MPO connector 1010 by a module 1100. The module 1100 comprises an MPO connector 1110 of a pinned type which may be coupled to MPO connector 1010 of a non-pinned type. The module 1100 comprises single connectors 1120 which are coupled with connector 1110 by optical fibers 1130. Each of the single connectors 1120 is coupled by a single patch cord cable 1500 to a port of optical transceiver 1600.

The end 1002 of the backbone trunk cable 1000 is connected to an optical transceiver unit 1700 by a module 1200 and single patch cord cables 1400. The module 1200 comprises a connector 1210 and single connectors 1220. The connector 1210 is coupled to the single connectors 1220 by optical fibers 1230. The connector 1210 may be formed as an MPO connector of a pinned type which is coupled to MPO connector 1020 of a non-pinned type. Each of the single connectors 1220 is connected to the optical transceiver 1700 by a single patch cord cable 1400.

In prospective optical transmission systems, the transceiver units will be equipped with ports which may directly be connected to a parallel optical transmission cable without using modules between a backbone trunk cable and a transceiver unit. The transceiver unit may be directly coupled to the backbone trunk cable by optical transmission cables called patch cord cables. FIG. 2 shows an optical assembly adapted to provide optical signals parallel via optical fibers of the optical transmission cables disposed between two transceiver units 2300, 2400 having parallel data input/output ports.

The optical assembly comprises an optical transmission cable 2000 configured as a backbone trunk cable. The backbone trunk cable comprises optical fibers 2030. A respective end 2031 of the optical fibers is connected to a connector 2010 and the respective other ends 2032 of the optical fibers 2030 are connected to a connector 2020. The connectors 2010 and 2020 may be formed as MPO connectors of a non-pinned type.

A transceiver unit 2300 has a port 2310 which is configured to be directly connected to a parallel optical transmission cable. The backbone trunk cable 2000 is connected to the transceiver unit 2300 by the optical transmission cable 2100 formed as patch cord cable. The patch cord cable 2100 comprises optical fibers 2130 which are terminated on a first of their ends 2131 by a connector 2110. The other respective ends 2132 of the optical fibers 2130 are terminated by a connector 2120. The connectors 2110 and 2120 may be formed as MPO connectors. MPO connector 2110 is formed as a connector of a pinned type. MPO connector 2120 is formed as a connector of a non-pinned type.

The transceiver unit 2400 is equipped with a port which is configured to be directly connected to a parallel optical transmission cable. In order to connect the backbone trunk cable 2000 to the transceiver unit 2400, an optical transmission cable 2200 formed as a patch cord cable is provided between MPO connector 2020 and parallel port 2410 of transceiver unit 2400. The patch cord cable 2200 comprises an MPO connector 2210 and an MPO connector 2220. MPO connector 2210 is formed as a connector of a pinned type which is adapted to be connected with non-pinned connector 2020. MPO connector 2220 is formed as a non-pinned type connector which is configured to be coupled with port 2410 of transceiver 2400.

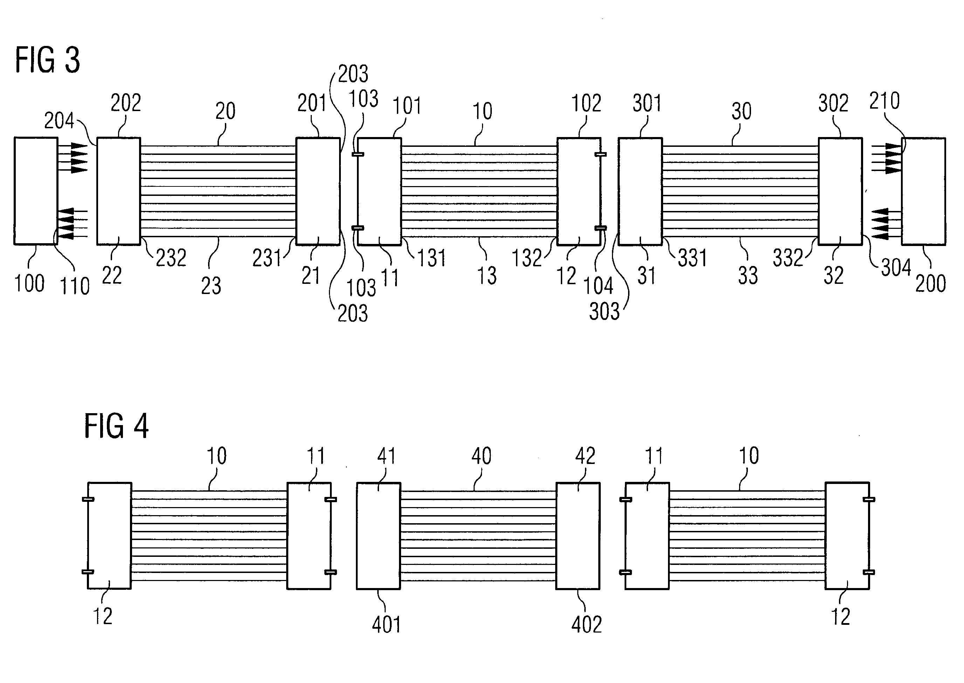

FIG. 3 shows an embodiment of an optical assembly comprising optical transmission cables 10, 20, and 30 which are used to connect optical transceiver units 100 and 200 with each other. The optical assembly comprises the optical transmission cable 10 which is formed as a backbone trunk cable. Optical transmission cable 10 may be installed under the floor or in the wall of a building. Optical transmission cable 10 may be used to connect transceivers located in different rooms of the building. The optical transmission cable 10 comprises a plurality of optical fibers 13 having respective ends 131, 132. The ends 131 of optical fibers 13 are terminated by connector 11 located at an end 101 of backbone trunk cable 13. The other respective ends 132 of optical fibers 13 are terminated by connector 12 located at an end 102 of backbone trunk cable 10. According to the embodiment of the optical assembly shown in FIG. 3, both of the connectors 11, 12 are configured as MPO connectors of a pinned type comprising pins 103, 104.

Optical transceiver 100 is provided with a port 110 for parallel transmission of optical signals in the direction to and from optical transceiver 100. The parallel port 110 of transceiver 100 is configured to be directly connected to an optical transmission cable used for parallel transmission of light signals.

An optical transmission cable 20 which is formed as a patch cord cable is disposed between port 110 of optical transceiver 100 and MPO connector 11 of backbone trunk cable 10. The patch cord cable 20 comprises connectors 21, 22 located on respective ends 201 and 202 of optical transmission cable 20. The optical transmission cable 20 comprises a plurality of optical fibers 23. Respective ends 231 of optical fibers 23 are terminated by connector 21 which may be formed as an MPO connector. Respective ends 232 of optical fibers 23 are terminated by connector 22 which may also be an MPO connector. Both connectors 21 and 22 of patch cord cable 20 are formed as connectors of a non-pinned type. That means connectors 21 and 22 have no pins but respective cavities 203, 204. The cavities 203 are configured to receive pins 103 of the pinned connector 11. The cavities 204 of connector 22 are configured to hold connector 22 at the port 110 of transceiver 100.

Transceiver 200 has a port 210 which is configured to receive and transmit optical signals via the optical path comprising optical transmission cables 10, 20, and 30. Optical transmission cable 30 comprises an end 301 terminated by connector 31 and an end 302 terminated by connector 32. Optical transmission cable 30 is formed as a patch cord cable including a plurality of optical fibers 33. Respective ends 331 of the optical fibers are terminated by connector 31. The other respective ends 332 of optical fibers 33 are terminated by connector 32. The connectors 31, 32 may be formed as MPO connectors of a non-pinned type. Connector 31 comprises cavities 303 adapted to receive pins 104 of connector 12 to couple connector 31 with connector 12. Connector 32 includes cavities 304 adapted to hold connector 32 at transceiver unit 200.

Optical fibers 13, 23, and 33 are formed to transmit optical signals in a parallel manner between transceiver units 100 and 200. In contrast to the embodiment of an optical assembly shown in FIG. 2, the optical assembly of FIG. 3 comprises connectors 21, 22 for patch cord cable 20 and connectors 31, 32 for patch cord cable 30 having no pins. The connectors which terminate the ends of the patch cord cables are formed as connectors of a non-pinned type. Furthermore, the backbone trunk cable 30 is equipped with connectors 11, 12 having pins 103, 104.

The backbone trunk cable is a cable which is more rugged in comparison with the patch cord cable. The backbone trunk cable has a minimum bend radius in a range of 40 mm to 80 mm, whereas the patch cord cable is more flexible having a minimum bend radius of more than 100 mm. Since the backbone trunk cable is pulled through channels in the floor or in the wall its maximum tensile load being in a range of between 400 to 600 N is much higher than the maximum tensile load of a patch cord cable being of about 200 N. The backbone trunk cable 30 is firmly installed in a wall or in a floor of a building. The patch cord transmission cables 20 and 30 may be flexibly arranged between the pinned-type connectors of the backbone trunk cable and the ports of electronic devices such as parallel transceivers units 100, 200.

FIG. 4 shows an embodiment of two backbone trunk cables 10, 10' which are connected by a patch cord cable 40. The backbone trunk cables 10 and 10' comprise MPO or MPT connectors of a pinned type. The patch cord cable 40 comprises MPO or MPT connectors 41, 42 of a non-pinned type. The connectors 41, 42 are located on both ends 401, 402 of patch cord cable 40. The connectors 41 and 42 are of a non-pinned type.

The optical assembly shown in FIG. 3 and 4 allows that patch cord cables having the same type of connector at both of their ends may be used to couple backbone trunk cables with transceiver units or to interconnect backbone trunk cables. In contrast to an embodiment of an optical assembly shown in FIG. 2 the complexity of an optical assembly is reduced since the same kind of interconnection cables terminated on both ends with the same type of connectors are used to couple backbone trunk cables and parallel optical transceiver units. The optical assembly and the method for connecting transceiver units by the optical assembly makes the migration to the parallel fiber cable technology simple and straightforward for the craft.

When using MPO / MTP patch cords having no pins, there is no risk of damaging pins on MPO / MPT connectors when installing the patch cords. Using patch cords equipped with non-pinned connectors eases the handling of the patch cord cables and reduces the risk of damage during handling. The optical assembly shown in FIG. 3 and 4 also avoids damaged connectors due to wrong combinations of two pinned connectors in one MPO adapter. Since both of the ends of the patch cord cables are terminated with connectors having cavities, a damage occurring when coupling the connectors with the transceiver units is avoided.

## Claims

1. An optical assembly, comprising:
- a first optical transmission cable (10) comprising first connectors (11, 12) being of a first type,
- a second optical transmission cable (20) comprising second connectors (21, 22) being of a second type,
- said first optical transmission cable (10) comprising ends (101, 102) respectively being terminated with one of said first connectors (11, 12),
- said second optical transmission cable (20) comprising ends (201, 202) respectively being terminated with one of said second connectors (21, 22),
- wherein connectors (11, 21) of different types are configured to be connected with each other,
- wherein said second connectors (21, 22) are respectively configured to be connected to an optical transceiver unit (100).

2. The optical assembly of claim 1, comprising:
- a third optical transmission cable (30) comprising third connectors (31, 32) being of said second type,
- said third optical transmission cable (30) comprising ends (301, 302) respectively being terminated with one of said third connectors (31, 32),
- said third connectors (31, 32) being configured to be connected to another optical transceiver unit (200).

3. The optical assembly of one of the claims 1 or 2,
- wherein the first and second optical transmission cable (10, 20) are configured to connect said optical transceiver unit (100) to said first optical transmission cable (10) by coupling one of the first connectors (11) located at a first of the respective ends (101) of said first optical transmission cable (10) to one of the second connectors (21) located at a first of the respective ends (201) of said second optical transmission cable (20) and by coupling another one of the second connectors (22) located at a second of the respective ends (202) of said second optical transmission cable to said optical transceiver unit (100),
- wherein the first and third optical transmission cable (10, 30) are configured to connect said other optical transceiver unit (200) to said first optical transmission cable (10) by coupling another one of the first connectors (12) located at a second of the respective ends (102) of said first optical transmission cable (10) to one of the third connectors (31) located at a first of the respective ends (201) of said third optical transmission cable (30) and by coupling another one of the third connectors (32) located at a second of the respective ends (302) of said third optical transmission cable to said other optical transceiver unit (200).

4. The optical assembly of one of the claims 1 to 3,
- wherein said first optical transmission cable (10) comprises a plurality of optical fibers (13),
- wherein each of said optical fibers (13) of the first optical transmission cable having a first end (131) being terminated with said one of the first connectors (11) and each of said optical fibers (13) of the first optical transmission cable having a second end (132) being terminated with said other one of the first connectors (12),
- wherein said one of the first connectors (11) is configured to be connected to said one of the second connectors (21),
- wherein said other one of the second connectors (12) is configured to be connected to said one of the third connectors (31).

5. The optical assembly of claim 4,
- wherein said second optical transmission cable (20) comprises a plurality of optical fibers (23),
- wherein each of said optical fibers (23) of the second optical transmission cable (20) having a first end (231) being terminated with said one of the second connectors (21) and each of said optical fibers (23) of said second optical transmission cable having a second end (232) being terminated with said other one of the second connectors (22),
- wherein said one of the second connectors (21) is configured to be connected to said one of the first connectors (11),
- wherein said other one of the second connectors (22) is configured to be connected to said optical transceiver unit (100) .

6. The optical assembly of one of the claims 4 or 5,
- wherein said third optical transmission cable (30) comprises a plurality of optical fibers (13),
- wherein each of said optical fibers (33) of the third optical transmission cable having a first end (331) being terminated with said one of the third connectors (31) and each of said optical fibers (33) of the third optical transmission cable having a second end (332) being terminated with said other one of the third connectors (32),
- wherein said one of the third connectors (31) is configured to be connected to said other one of the first connectors (12),
- wherein said other one of the third connectors (32) is configured to be connected to said other optical transceiver unit (200).

7. The optical assembly of one claims 1 to 6, comprising:
- another first optical transmission cable (10') comprising said first connectors (11, 12) being of said first type,
- another second optical transmission cable (40) comprising said second connectors (41, 42) being of a second type,
- wherein the other second optical transmission cable (40) is configured to couple said first optical transmission cable (10) to said other first optical transmission cable (10') by connecting said second optical transmission cable (40) with one of its second connectors (41) to said first optical transmission cable (10) and by connecting said second optical transmission cable (40) with another one of its second connectors (42) to said other first optical transmission cable (10').

8. The optical assembly of one of the claims 2 to 7,
- wherein the first connectors (11, 12), respectively, contain at least one pin (103, 104),
- wherein the second connectors (21, 22), respectively, contain at least one cavitiy (203, 204),
- wherein the third connectors (31, 32), respectively, contain at least one cavity (303, 303),
- said at least one pin (103, 104) being configured to hold the first connectors (11, 12) at one of the respective cavities (203, 303) of the second and third connectors (21, 31),
- another one of said at least one cavity (204) of said second optical transmission cable (20) being configured to hold said other one of the second connectors (22) at said optical transceiver unit (100),
- another one of said at least one cavity (304) of said third optical transmission cable (30) being configured to hold said other one of the third connectors (32) at said other optical transceiver unit (200).

9. The optical assembly of one of the claims 1 to 8,
wherein the first connectors (11, 12) are of a pinned type and the second and third connectors (21, 22, 31, 32), respectively, are of a non-pinned type.

10. The optical assembly of one of the claims 1 to 9,
- wherein the first, second and third optical transmission cables (10, 20, 30) are configured to transmit optical signals parallel via the respective optical fibers (13, 23, 33),
- wherein the first optical transmission cable (10) is formed as a backbone trunk cable and wherein the second and third optical transmission cables (20, 30) are respectively formed as a parallel patch cord cable.

11. A method for connecting optical transceiver units by an optical assembly, comprising:
- providing a first optical transmission cable (10) and a second optical transmission cable (20),
- providing first connectors (11, 12) being of a first type and providing second connectors (21, 22) being of a second type wherein connectors (11, 21) of different types are configured to be connected with each other and said second connectors (21, 22) are configured to be connected to an optical transceiver unit (100),
- terminating ends (101, 102) of said first optical transmission cable (10) by said first connectors (11, 12),
- terminating ends (201, 202) of said second optical transmission cable (20) by said second connectors (21, 22).

12. The method of claim 11, comprising:
- coupling a first one of the ends (201) of said second optical transmission cable (20) to one of the ends (101) of said first optical transmission cable (10) by connecting one of the second connectors (21) to one of the first connectors (11),
- coupling a second one of the ends (202) of said second optical transmission cable (20) to said one of the optical transceiver units (100) by connecting another one of the second connectors (22) to said one of the optical transceiver units (100).

13. The method of claim 12, comprising:
- providing a third optical transmission cable (30),
- providing third connectors (31, 32) being of said second type,
- terminating ends (301, 302) of said third optical transmission cable (30) by said third connectors (31, 32),
- coupling a first one of the ends (301) of said third optical transmission cable (30) with another one of the ends (102) of said first optical transmission cable (10) by connecting one of the third connectors (31) to another one of the first connectors (12),
- coupling a second one of the ends (302) of said third optical transmission cable (30) with another one of the optical transceiver units (200) by connecting another one of the third connectors (32) to said other one of the optical transceiver units (200) .

14. The method of claim 13, comprising:
- providing another first optical transmission cable (10') comprising said first connectors (11, 12) being of said first type,
- providing another second optical transmission cable (40) comprising said second connectors (41, 42) being of a second type,
- coupling said first optical transmission cable (10) with said other first optical transmission cable (10') by connecting said second optical transmission cable (40) with one of its second connectors (41) to said first optical transmission cable (10) and by connecting said second optical transmission cable (40) with another one of its second connectors (42) to said other first optical transmission cable (10').

15. The method of one of claims 11 to 14,
- wherein the ends (101, 102) of the first optical transmission cable (10) are provided with connectors (11, 12) of a pinned type,
- wherein the respective ends (201, 202, 301, 302) of the second and third optical transmission cable (20, 30) are provided with connectors (21, 22, 31, 32) of an non-pinned type.
